(19) Europäisches Patentamt / European Patent Office / Office européen des brevets

(11) **EP 1 321 318 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
*B60G 17/04* (2006.01)    *F16F 9/084* (2006.01)

(21) Anmeldenummer: **02023502.4**

(22) Anmeldetag: **22.10.2002**

(54) **Hydropneumatische Feder**

Hydropneumatic spring

Ressort hydropneumatique

(84) Benannte Vertragsstaaten:
**AT BE BG CH CY CZ DE DK EE ES FI FR GB GR IE IT LI LU MC NL PT SE SK TR**

(30) Priorität: **19.12.2001 DE 20120533 U**

(43) Veröffentlichungstag der Anmeldung:
**25.06.2003 Patentblatt 2003/26**

(73) Patentinhaber: **Goldschmitt techmobil AG 74746 Höpfingen (DE)**

(72) Erfinder: **Mairon, Markus, Dipl.-Ing. 74746 Höpfingen (DE)**

(74) Vertreter: **Pöhner, Wilfried Anton, Dr. Patentanwalt Postfach 6323 97070 Würzburg (DE)**

(56) Entgegenhaltungen:
EP-A- 1 079 138     DE-A- 4 311 243
DE-A- 19 961 714     DE-C- 936 846
US-A- 3 966 223

EP 1 321 318 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine hydropneumatische Anordnung als Federung in einer Fahrzeugaufhängung mit einem pneumatischen Aggregat, das ein erstes Ende aufweist, das dem Fahrzeugrahmen zugeordnet ist und ein zweites Ende aufweist,

das einem relativ zum Fahrzeugrahmen bewegbaren Element, insbesondere der Fahrzeugachse zugeordnet ist, wobei das erste Ende am Fahrzeugrahmen festgelegt ist, das zweite Ende mit dem Kolben/Zylinder eines einfach wirkenden ersten Hydraulikzylinders verbunden ist, dessen Zylinder/Kolben ebenfalls am Fahrzeugrahmen befestigt ist, und der hydraulisch, vorzugsweise mittels einer Leitung, mit einem einfach wirkenden zweiten Hydraulikzylinder verbunden ist, dessen Kolben/Zylinder dem bewegbaren Element, vorzugsweise der Fahrzeugachse, und dessen Zylinder/Kolben dem Fahrzeugrahmen zugeordnet ist, wobei der Koben des ersten Hydraulikzylinders in dessen Zylinder einfährt, wenn der Kolben des zweiten Hydraulikzylinders aus dessen Zylinder ausfährt und umgekehrt.

Hydropneumatische Federn weisen in der Regel einen Balg aus elastischem Material auf, der mit Luft gefüllt oder über ein Ventil von außen her befüllbar ist. Federn dieser Art kommen als Einzelfeder oder als Zusatzfeder zur Anwendung. Der Anwendungsbereich von hydropneumatischen Federn umfasst sowohl eine Federung von Fahrzeugen unterschiedlicher Art, wie LKW, Busse, Eisenbahn oder Straßenbahn als auch das Heben von Lasten, wie beispielsweise bei Hubrahmen an Nutzfahrzeugen, die mittels hydraulisch oder pneumatisch betätigter Hubschwingen gegenüber dem Fahrzeugrahmen anhebbar sind.

Nach dem Stand der Technik wird der Federbalg zwischen Fahrzeugrahmen und dem relativ zum Fahrzeugrahmen bewegbaren Element eingebaut. Bei Verwendung als Feder ist der Balg in der Regel mittels je einer Konsole mit seinem dem Fahrzeugrahmen zugeordneten Ende am Fahrzeugrahmen und mit seinem der Achse zugeordneten Federende an der Achse befestigt. Bei einer Verkleinerung des Abstandes zwischen Achse und Rahmen infolge der Fahrzeugbewegungen wir der Balg dann zusammengepresst und dadurch eine Federkraft auf Achse und Rahmen erzeugt.

Die übliche Anbringung des Federbalgs zwischen Achse und Fahrzeugrahmen führt häufig jedoch zu Problemen, da in diesem Bereich des Fahrzeugs in der Mehrzahl der Fälle wenig Raum für den Einbau einer hydropneumatischen Feder vorhanden ist, insbesondere dann, wenn es sich um Federn großer Durchmesser oder um Zusatzfedern handelt.

Aus der DE 43 11 243 A1 ist eine Hubvorrichtung für eine Liftachse bekannt, bei der die Bewegung über einen hydraulisch betätigten Zylinder, dessen Medium über einen weiteren hydraulischen Zylinder zur Verfügung gestellt wird, der seinerseits über ein pneumatisches Aggregat angesteuert wird. Das Anheben und Absenken der Liftachse erfolgt über externe Ansteuerung des pneumatischen Aggregates.

Maßnahmen für den Höhenausgleich einer Radaufhängung lassen sich der US 3 966 223 entnehmen, bei dem ein Balg genutzt wird, in den eine Feder integriert wurde.

Hiervon ausgehend hat sich die Erfindung die Aufgabe gestellt, eine hydropneumatische Feder anzugeben, die beim Einbau keinerlei Probleme infolge Platzmangels verursacht, am Fahrzeug gut zugänglich ist daher Einbau- und Reparaturaufwand vermindert und sowohl als Einzelfeder als auch als Zusatzfeder in beliebigem Durchmesser in jedem Fahrzeug einbaubar ist.

Erfindungsgemäß wird diese Aufgabe dadurch gelöst, dass das pneumatische Aggregat ein Federbalg (5) ist.

Bei vorliegender Feder ist das erste Ende des Federbalgs am Fahrzeugrahmen befestigt. Dessen zweites Ende hingegen ist, nicht wie bei Federn nach dem Stand der Technik mit der Fahrzeugachse oder dem relativ zum Rahmen bewegbaren Element verbunden, sondern mit einer Kette weiterer zur Erfindung gehöriger Komponenten. Diese Komponenten umfassen einen ersten und einen zweiten Hydraulik, die einfach wirkend ausgebildet, d. h. nur von einer Kolbenseite her hydraulisch beaufschlagbar sind. Zwischen beiden Hydraulikzylindern besteht eine hydraulische Verbindung, die vorzugsweise durch eine Leitung realisiert ist.

Der erste Hydraulikzylinder ist mit dem Federbalg in Reihe geschaltet, wobei zwei Alternativen möglich sind. Im ersten Fall ist der Kolben kraftschlüssig mit dem zweiten Federende verbunden und dementsprechend der Zylinder am Fahrzeugrahmen befestigt, während im zweiten Fall umgekehrt der Zylinder am Federende und der Kolben am Fahrzeugrahmen festgelegt sind. Der zweite Hydraulikzylinder ist hingegen zwischen Fahrzeugrahmen und dem relativ zum Fahrzeugrahmen bewegbaren Element, in der Regel der Fahrzeugachse angeordnet. Auch hier sind die beiden alternativen Ausführungen möglich, nach denen entweder der Kolben an der Achse und der Zylinder am Fahrzeugrahmen oder umgekehrt der Zylinder an der Achse und der Kolben am Fahrzeugrahmen festgelegt sind. Die Verbindung zwischen den Hydraulikzylindern ist so ausgeführt, daß der Kolben des ersten Hydraulikzylinders in dessen Zylinder einfährt, wenn der Kolben des zweiten Hydraulikzylinders aus dessen Zylinder ausfährt und umgekehrt.

Betrachtet man zunächst ein entlastetes Fahrzeug, dann ist der Abstand zwischen Achse und Fahrzeugrahmen maximal, der Kolben des zweiten Hydraulikzylinder ist dementsprechend ausgefahren, während sich der des ersten Hydraulikzylinders in eingefahrenem Zustand befindet. Nimmt man dann an, daß sich der genannte Abstand aufgrund einer Relativbewegung zwischen Achse und Fahrgestell verringert, fährt der Kolben in den ersten Hydraulikzylinder ein, während der im zweiten Hydraulikzylinder ausfährt und dabei gegen das zweite Federende anläuft. Aufgrund dieses Vorgangs baut sich im Federbalg, d.h. zwischen dessen zweiten und dem am Fahrzeugrahmen festgelegten ersten Federende eine Druckkraft auf. Diese Kraft wird über die kraftschlüssige Verbindung vom zweiten Federende über die beiden Hydraulikzylinder auf die Achse des Fahrzeuges übertragen. Dabei erfährt die Achse eine Federwirkung, die äquivalent der ist, wenn die hydropneumatische Feder direkt zwischen Fahrzeugrahmen und Achse eingebaut wäre.

Ein Kerngedanke der Erfindung besteht darin, daß durch die Zwischenschaltung der beiden Hydraulikzylinder zwischen Achse und Federbalg, der Zwang entfällt, die Feder am Ort der Achse einzubauen. Vielmehr kann die Feder in vorteilhafter Weise an einem beliebigen Ort am Fahrzeugrahmen installiert sein, wobei dennoch eine kraftschlüssige Verbindung zur Achse über die Hydraulikzylinder und deren hydraulische Verbindungsleitung hergestellt wird. Da die hydraulische Verbindungsleitung bezüglich Länge und Gestalt beliebig ausführt sein kann, bestehen keinerlei Beschränkungen für den Einbauort der hydropneumatischen Feder. Sie kann daher am Fahrzeugrahmen dort positioniert werden, wo der Platz am geeignetsten ist, d.h. genügend Raum für die vorliegenden Federgröße bietet und für Einbau und Wartung bequem zugänglich ist.

Gemäß einem Merkmal der Erfindung sind bei vorliegender hydropneumatischer Feder Balge unterschiedlichen Durchmessers und/oder unterschiedlichen Maximalhubs vorgesehen. Dabei bestimmt der Durchmesser des Federbalgs im wesentlichen die Tragfähigkeit der Feder, wohingegen der Maximalhub im wesentlichen durch den Hub der Achse relativ zum Fahrzeugrahmen bestimmt wird. Je nach Anwendungsfall können diese Parameter mitunter auch sehr groß ausfallen. Aufgrund des wahlfreien Ortes zur Montage des Federbalgs wird vorliegende Erfindung jedoch selbst diesen Fällen gerecht.

Der Anwendungsbereich hydropneumatischer Federn erstreckt sich zu einem großen Teil auf die Federung von Fahrzeugen unterschiedlicher Art. Hierbei werden sie sowohl als Einzelfeder als auch als Zusatzfeder eingesetzt. Die Feder gemäß vorliegender Erfindung läßt sich in beiden Bereichen gleichermaßen einsetzen. Dabei kommt insbesondere bei einer Verwendung als Zusatzfeder der Vorteil zum Tragen, daß die Feder nicht am Ort der Achse eingebaut werden muß, da die konstruktiven Gegebenheiten der Fahrzeuge häufig keinen Raum für den Einbau von Zusatzfedern lassen.

Neben einer Verwendung der vorgeschlagenen Feder im Bereich der Fahrzeugfederung ist gemäß einem Merkmal der Erfindung auch vorgesehen, die vorgeschlagene Feder zum Heben von Lasten einsetzen, wie beispielsweise bei dem im Stand der Technik angeführten Hubrahmen an Nutzfahrzeugen, der mittels hydraulisch oder pneumatisch betätigter Hubschwingen gegenüber dem Fahrzeugrahmen anhebbar ist. Bei diesem Anwendungsbereich kommen die Vorteile der erfindungsgemäßen Feder in gleicher Weise zum Tragen wie bei deren Einsatz als Fahrzeugfeder.

Weitere Ausgestaltungen der hydropneumatischen Feder gemäß vorliegender Erfindung betreffen die Ausführung von erstem und zweitem Hydraulikzylinder und deren hydraulischer Verbindungsleitung.

Bei Anwendung als Fahrzeugfeder wird die erfindungsgemäße Feder in der Regel so ausgeführt, daß der Federbalg und der erste Hydraulikzylinder "irgendwo" am Fahrzeugrahmen montiert und über eine Hydraulikleitung mit dem im Bereich zwischen Achse und Fahrgestell eingebauten zweiten Hydraulikzylinder verbunden sind. Mitunter läßt sich das Platzproblem zwischen Achse und Fahrgestell aber auch bereits dadurch lösen, daß die hydropneumatische Feder lediglich aus der Richtung des Achsenhubs heraus gedreht werden muß, um Platz für deren Einbau zu finden. Denkbar sind hierbei beispielsweise Lösungen, bei denen der Federhub und der Achsenhub zu einander einen Winkel von 90 Grad einschließen. Mit vorliegender Erfindung lassen sich solcherart konstruktive Vorgaben auf einfache Weise umsetzen. Für diesen Fall wird vorgeschlagen, den ersten und zweiten Hydraulikzylinder und die Verbindungsleitung als kompakte Baueinheit auszuführen, wobei der erste Hydraulikzylinder gegenüber dem zweiten lediglich gegeneinander verschwenkt angeordnet ist.

Bei der Standardausführung der erfindungsgemäßen Feder ist vorgesehen, den Durchmesser und den Kolbenhub von erstem und zweitem Hydraulikzylinder jeweils gleich groß auszubilden. Diese Ausbildung führt dazu, daß der Hub der Achse relativ zum Fahrzeugrahmen und der Hub des Federbalgs einander 1:1 entsprechen.

Bei einer bevorzugten Ausführungsform der hydropneumatischen Feder weisen der erste und der zweite Hydraulikzylinder jedoch unterschiedliche Durchmesser auf. Diese Ausbildung bietet die Möglichkeit, zwischen dem Hub der Achse und dem Hub des Federbalgs eine Über- oder Untersetzung herzustellen. Der formelmäßige Zusammenhang zwischen Kolbenhub und -durchmesser der beiden Hydraulikzylinder wird dabei durch die einfache Forderung nach einem Erhalt der Masse gegeben, d.h. mit anderen Worten dadurch, daß gleichviel Hydrauliköl in den einen Zylinder einströmt wie aus dem andern ausströmt. Diese Aussage führt zu der Gleichung

$$l_1 \times \pi \times r_1{}^2 = l_2 \times \pi \times r_2{}^2 \quad \text{bzw.} \quad l_1 / l_2 = r_2{}^2 / r_1{}^2$$

wobei $l_1$ den Hub des Federbalgs bzw. des ersten Kolbens, $r_1$ den Radius des ersten Hydraulikzylinders, $l_2$ den Hub der Achse bzw. des zweiten Kolbens, $r_2$ den Radius des zweiten Hydraulikzylinders bezeichnen.

Sind beispielsweise der Hub $l_1$ des Federbalgs und der Achsenhub $l_2$ vorgegebene Parameter, deren Größen einander nicht gleich sind, dann müssen sich nach o.g. Gleichung die Radien der Kolben zu den genannten Hüben verhalten wie $r_2^2 / r_1^2 = l_1 / l_2$. Damit ist andererseits prinzipiell die Möglichkeit gegeben, jeden vorgegebenen Federhub an jeden vorgegebenen Achsenhub anzupassen. In der Praxis bedeutet dies, daß Federbälge unterschiedlichen Maximalhubs für den gleichen Achsenhub eingesetzt werden können. Für die Lösung eines Federproblems kommen somit alle Balge in Betracht, welche die gewünschte Federcharakteristik aufweisen, unabhängig von deren maximalem Hub. Damit ergibt sich als weiterer Vorteil der Feder gemäß vorliegender Erfindung eine große Flexibilität bei der Auswahl der Federbalge.

Um Federn nicht zu überlasten ist in der Regel ein Anschlag vorgesehen, welcher den Maximalhub der Feder begrenzt. Bei Ausführung der hydropneumatischen Feder gemäß vorliegender Erfindung ist dieser Anschlag entweder am Federbalg angebracht oder an den Hydraulikzylindern vorgegeben. In letzterem Fall wird die Endstellung von Kolben/Zylinder des ersten Hydraulikzylinders im ausgefahrenen Zustand bzw. die Endstellung von Kolben/Zylinder des zweiten Hydraulikzylinders im eingefahrenen Zustand begrenzt.

Bei Zusatzfedern ist es oft auch sinnvoll, wenn deren Federkraft erst nach einem gewissen Anfangshub der Achse zur Wirkung kommt. Dementsprechend weist eine Ausführungsform der vorgeschlagenen Feder zwischen Federbalg und erstem Kolben/Zylinder ein Element auf, welches eine gewisse Relativbewegung der beiden Komponenten zueinander zuläßt. Diese Ausbildung führt dazu, daß eine Übertragung von Kräften zwischen Kolben und Federbalg erst dann erfolgt, wen sich beide Komponente um eine gewisse Wegstrecke aufeinander zu bewegt haben. Nach Überwindung dieses Anfangshubs wird der Federbalg komprimiert und ab diesem Zeitpunkt eine Federkraft erzeugt, welche über die hydraulische Strecke aus beiden Hydraulikzylindern und der Verbindungsleitung zwischen den Zylindern auf die Achse übertragen wird. Bei einer ähnlichen Lösung ist ein derartiges Element zwischen zweitem Kolben/Zylinder und Achse vorgesehen. Die hiermit erzielbare Wirkung ist identisch der beschriebenen.

Eine besonders bevorzugte Ausführungsform der erfindungsgemäßen hydropneumatischen Feder weist im ersten oder im zweiten Hydraulikzylinder, oder in der Leitung zwischen beiden genannten Hydraulikzylindern eine hydraulische Drossel auf. Im Rahmen vorliegender Erfindung ist darunter ein Element zu verstehen, dessen Querschnitt klein gegen den Querschnitt der Hydraulikzylinder ist. Die Drossel stellt für die hindurchströmende Flüssigkeit einen gewissen Strömungswiderstand dar, welcher bei geringer Strömungsgeschwindigkeit gering, bei höherer Strömungsgeschwindigkeit größer ausfällt. Bei geeigneter Dimensionierung kann die Drossel daher dazu genutzt werden, dem Hydrauliksystem der vorgeschlagenen Feder die Eigenschaft eines Stoßdämpfers zu verleihen. Die erfindungsgemäße Feder insgesamt mit all ihren Komponenten vereint in vorliegender Ausführungsform somit die Eigenschaften einer Feder als auch die eines Stoßdämpfers in sich. Damit sind für vorliegende hydropneumatische Feder weitreichend Einsatzgebiete gegeben, die über eine Anwendung als reine Feder weit hinausgehen. Bei Ausrüstung von Fahrzeugen mit vorliegender Ausführung der erfindungsgemäßen Feder werden herkömmliche Stoßdämpfer entbehrlich mit der vorteilhaften Folge einer Einsparung wesentlicher Kosten.

Weitere Einzelheiten, Merkmale und Vorteile der Erfindung lassen sich dem nachfolgenden Teil der Beschreibung entnehmen. In diesem Teil wird eine Ausführungsform der erfindungsgemäßen Feder anhand einer Zeichnung näher erläutert. Die Figur zeigt in schematischer Darstellung einen Ausschnitt des Fahrzeugrahmens im Bereich der Achsaufhängung.

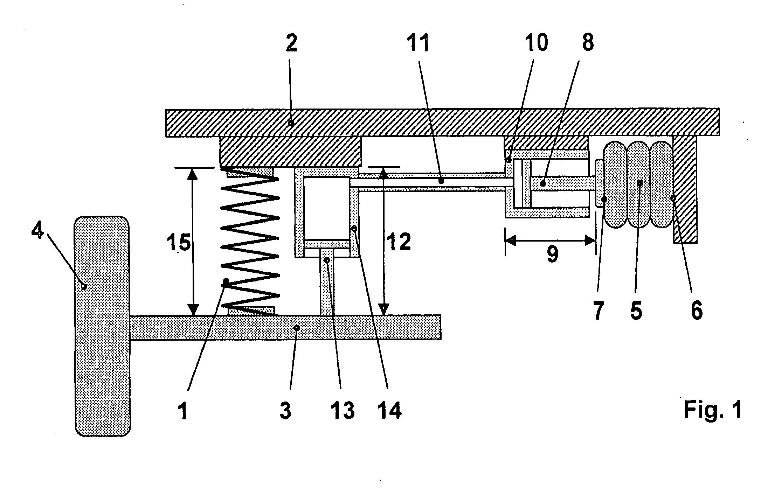

In Figur 1 ist eine Anwendung der hydropneumnatischen Feder gemäß vorliegender Erfindung als Zusatzfeder in einem Fahrzeug dargestellt. Die Hauptfeder 1 ist zwischen Fahrzeugrahmen 2 und Achse 3 angeordnet. Zur Vereinfachung der Zeichnung ist vom Fahrzeugrahmen 2 und der Achse 3 nur ein Abschnitt im Bereich eines Rades 4 wiedergegeben. Die Zusatzfeder ist in vorliegender Zeichnung durch den Federbalg 5 wiedergegeben, der an einem beliebigen Ort des Fahrzeugrahmens 2 befestigt ist. Dabei ist das erste Ende 6 des Federbalgs 5 am Rahmen 2 und das zweite Ende 7 am Kolben 8 eines ersten Hydraulikzylinders 9 festgelegt. Dessen Zylinder 10 ist ebenfalls am Rahmen 2 befestigt und über die Leitung 11 mit einem weiteren Hydraulikzylinder 12 verbunden. Dabei ist der Kolben 13 des weiteren Hydraulikzylinders mit der Achse 3 verbunden, während dessen Zylinder 14 am Fahrzeugrahmen 2 festgelegt ist. Beide Hydraulikzylinder 9, 12 sind jeweils als einfach wirkende Kolben/Zylinder-Anordnung ausgebildet, d.h. die Kolben werden nur von einer Seite her hydraulisch beaufschlagt. Wie der Zeichnung zu entnehmen ist, sind beide Hydraulikzylinder 9, 12 in Reihe geschaltet, was bedeutet, daß der Kolben 8 des ersten Hydraulikzylinders 9 aus dessen Zylinder 10 ausfährt, wenn der Kolben 13 des zweiten Hydraulikzylinders 12 in dessen Zylinder 14 einfährt und umgekehrt.

Der in Figur 1 dargestellte Augenblick gibt die Hauptfeder 1 in entlastetem Zustand wieder, der Abstand 15 zwischen Achse 3 und Fahrzeugrahmen 2 nimmt daher seinen größten Wert an. Diesem Zustand entspricht ein ausgefahrener Kolben 13 des zweiten Hydraulikzylinders 12 und ein eingefahrener Kolben 8 des ersten Hydraulikzylinders 9. Verringert sich nun der Abstand 15 zwischen Achse 3 und Fahrzeugrahmen 2, fährt der Kolben 13 in den Zylinder 14 ein, während der Kolben 8 aus dem Zylinder 10 ausfährt und dabei gegen das zweite Federende 7 des Federbalgs 5 anläuft. Durch diesen Vorgang wird der Federbalg 5 zusammengedrückt und erzeugt dabei eine Federkraft, welche über das hydraulische System aus Hydraulikzylinder 9, Hydraulikzylinder 12 und Verbindungsleitung 11 auf die Achse des Fahrzeuges zurück wirkt. Die auf die Achse einwirkende Federkraft ist dabei äquivalent der, welche eine unmittelbar am Ort der Hauptfeder 1 eingebaute Zusatzfeder erbringen würde. Bei der in Figur 1 dargestellten Ausführungsform der erfindungsgemäßen Feder ist der Durchmesser und der Kolbenhub von erstem und zweitem Hydraulikzylinder 9, 12 jeweils gleich groß ausgebildet. Diese Ausbildung führt dazu, daß der Hub der Achse 3 und der Hub des Federbalgs 5 einander gleich sind.

Die hydraulische Verbindungsleitung 11 kann bezüglich Länge und Gestalt beliebig ausführt sein. Dies hat zur Folge, daß für den Einbauort der hydropneumatischen Feder gemäß vorliegender Erfindung keinerlei Einschränkungen bestehen. Die Feder kann daher an der Stelle am Fahrzeugrahmen positioniert werden, die genügend Raum für die gewählte Federgröße bietet und für Einbau und Wartung bequem zugänglich ist.

**Patentansprüche**

1. Hydropneumatische Anordnung als Federung in einer Fahrzeugaufhängung mit einem pneumatischen Aggregat,

- das ein erstes Ende (6) aufweist,

- das dem Fahrzeugrahmen (2) zugeordnet ist

- und ein zweites Ende (7) aufweist,

- das einem relativ zum Fahrzeugrahmen (2) bewegbaren Element, insbesondere der Fahrzeugachse (3) zugeordnet ist, wobei

- das erste Ende (6) am Fahrzeugrahmen (2) festgelegt ist,
- das zweite Ende (7) mit dem Kolben/Zylinder (8/10) eines einfach wirkenden ersten Hydraulikzylinders (9) verbunden ist,

- dessen Zylinder/Kolben (10/8) ebenfalls am Fahrzeugrahmen (2) befestigt ist,
- und der hydraulisch, vorzugsweise mittels einer Leitung (11), mit einem einfach wirkenden zweiten Hydraulikzylinder (12) verbunden ist,

- dessen Kolben/Zylinder (13/14) dem bewegbaren Element, vorzugsweise der Fahrzeugachse (3),
- und dessen Zylinder/Kolben (14/13) dem Fahrzeugrahmen (2) zugeordnet ist,

- wobei der Kolben (8) des ersten Hydraulikzylinders (9) in dessen Zylinder (10) einfährt, wenn der Kolben (13) des zweiten Hydraulikzylinders (12) aus dessen Zylinder (14) ausfährt und umgekehrt,

**dadurch gekennzeichnet, dass** das pneumatische Aggregat ein Federbalg (5) ist.

2. Hydropneumatische Anordnung nach Anspruch 1, **dadurch gekennzeichnet, dass**

- Federbalge (5) unterschiedlichen Durchmessers und/oder unterschiedlichen Maximalhubs vorgesehen sind.

3. Hydropneumatische Anordnung nach Anspruch 1 oder 2, **dadurch gekennzeichnet, dass**

- sie eine Einzelfeder oder eine Zusatzfeder ist.

4. Hydropneumatische Anordnung nach einem der Ansprüche 1 - 3, **dadurch gekennzeichnet, dass**

- sie eine Fahrzeugfeder
- oder eine Lasthubfeder ist.

5. Hydropneumatische Anordnung nach einem der Ansprüche 1 - 4 , **dadurch gekennzeichnet, dass**

- der erste (9) und der zweite (12) Hydraulikzylinder eine Baueinheit bilden,
- wobei beide Hydraulikzylinder (9, 12) vorzugsweise um einen definierten Winkel gegeneinander verdreht angeordnet sind.

**6.** Hydropneumatische Anordnung nach einem der Ansprüche 1 - 5 , **dadurch gekennzeichnet, dass**

- der erste (9) und der zweite (12) Hydraulikzylinder unterschiedliche Durchmesser aufweisen,
- und vorzugsweise das Verhältnis von deren Quadraten dem Verhältnis aus maximalem Hub zwischen Achse (3) und Fahrzeugrahmen (2) und dem maximalem Hub des Federbalgs (5) entspricht.

**7.** Hydropneumatische Anordnung nach einem der Ansprüche 1 - 6 , **dadurch gekennzeichnet, dass**

- die Endstellung von Kolben/Zylinder (8, 10) des ersten Hydraulikzylinders (9) im ausgefahrenen Zustand,
- und/oder die Endstellung von Kolben/Zylinder (13, 14) des zweiten Hydraulikzylinders (12) im eingefahrenen Zustand
- und/oder der Maximalhub des Federbalgs (5) jeweils durch einen Anschlag begrenzt ist.

**8.** Hydropneumatische Anordnung nach einem der Ansprüche 1-7, **dadurch gekennzeichnet, dass**

- zwischen Federbalg (5) und erstem Kolben/Zylinder (8, 10) ein Element vorgesehen ist, welches eine gewisse Relativbewegung der beiden Komponenten zueinander zulässt,
- und/oder zwischen zweitem Kolben/Zylinder (13, 14) und Achse (3) ein weiteres Element gleichen Eigenschaft vorgesehen ist.

**9.** Hydropneumatische Anordnung nach einem der Ansprüche 1 - 8 , **dadurch gekennzeichnet, dass**

- im ersten Hydraulikzylinder (9),
- und/oder im zweiten Hydraulikzylinder (12),
- und/oder in der Leitung (11) zwischen den beiden Hydraulikzylindern eine Drossel vorgesehen ist.

**Claims**

**1.** The invention relates to a hydropneumatic arrangement as cushioning in a vehicle suspension comprising a pneumatic assembly,

- having a first end (6),

  - which is assigned to the vehicle frame (2)

- and a second end (7),

  - which has an element, which is movable with respect to the vehicle frame (2) and is in particular assigned to the vehicle axle (3),

- the first end (6) being fixed to the vehicle frame (2),
- the second end (7) being connected to the piston/cylinder (8/10) of a single-acting first hydraulic cylinder (9),

  - the cylinder/piston (10/8) of which is also fixed on the vehicle frame (2),
  - and which is hydraulically connected to a single-acting second hydraulic cylinder (12), preferably by means of a line (11),

    - the piston/cylinder (13/14) of which is assigned to the movable element, preferably the vehicle axle (3)
    - and its cylinder/piston (14/13) to the vehicle frame (2)

- the piston (8) of the first hydraulic cylinder (9) retracting into its cylinder (10), when the piston (13) of the second hydraulic (12) extends from its cylinder 14, and vice versa.

**characterised in that** the pneumatic element is a spring bellows (5)..

**2.** Hydropneumatic assembly according to claim 1, **characterised in that**

- spring bellows (5) of different diameter and/or different maximum stroke are provided.

3. Hydropneumatic assembly according to claim 1 or 2, **characterised in that** it is an individual spring or an auxiliary spring.

4. Hydropneumatic assembly according to one of claims 1-3, **characterised in that**

   - it is a vehicle spring
   - or a load-lifting spring.

5. Hydropneumatic assembly according to one of claims 1-4, **characterised in that**

   - the first (9) and the second (12) hydraulic cylinder form a constructional unit,
   - both hydraulic cylinders (9, 12) preferably being rotated through a defined angle with respect to one another.

6. Hydropneumatic assembly according to one of claims 1-5, **characterised in that**

   - the first (9) and the second (12) hydraulic cylinder have different diameters,
   - and preferably the ratio of their square powers corresponds to the ratio of the maximum stroke between the axle (3) and vehicle frame (2) and the maximum stroke of the spring bellows (5).

7. Hydropneumatic assembly according to one of claims 1-6, **characterised in that**

   - the end position of the piston/cylinder (8, 10) of the first hydraulic cylinder (9) in the extended state,
   - and/or the end position of the piston/cylinder (13, 14) of the second hydraulic cylinder (12) in the retracted state,
   - and/or the maximum stroke of the spring bellows (5) is in each case limited by a stop.

8. Hydropneumatic assembly according to one of claims 1-7, **characterised in that**

   - an element is provided between the spring bellows (5) and first piston/cylinder (8, 10) that permits a certain relative movement of the two components with respect to one another.
   - and/or a further element with the same property is provided between the second piston/cylinder (13, 14) and axle (3).

9. Hydropneumatic assembly according to one of claims 1-8, **characterised in that** a throttle is provided

   - in the first hydraulic cylinder (9),
   - and/or in the second hydraulic cylinder (12),
   - and/or in the line (11) between the two hydraulic cylinders.


**Revendications**

1. Disposition hydropneumatique en tant qu'amortissement d'une suspension de véhicule avec un agrégat pneumatique,

   • présentant une première extrémité (6),
   • qui est affectée au cadre du véhicule (2),
   • et présentant une seconde extrémité (7),
   • qui est affectée à un élément mobile par rapport au cadre du véhicule (2), notamment à l'axe du véhicule (3), sachant que
   • la première extrémité (6) est fixée sur le cadre du véhicule (2),
   • la seconde extrémité (7) étant reliée avec le piston/vérin (8/10) d'un premier vérin hydraulique (9) à effet simple,
   • dont le vérin/piston (10/8) est également fixé au cadre du véhicule (2),
   • et qui est relié hydrauliquement, de préférence au moyen d'une conduite (11) à un second vérin hydraulique (12) à effet simple,
   • dont le piston/vérin (14/13) est affecté à l'élément mobile, de préférence l'axe du véhicule (2),
   • sachant que le piston (8) du premier vérin hydraulique (9) se rétracte dans ce vérin (10) lorsque le piston (13) du second vérin hydraulique (12) sort de son vérin (14) et inversement,

**caractérisée par le fait que** l'agrégat pneumatique est un coussin pneumatique (5).

2. Disposition hydropneumatique selon la revendication 1,
**caractérisée par le fait**

• **que** des coussins pneumatiques (5) de diamètres différents et/ou de Courses maximales différentes sont prévus.

3. Disposition hydropneumatique selon les revendications 1 ou 2,
**caractérisée par le fait**

• **qu'**il s'agit d'un ressort unique ou d'un ressort supplémentaire.

4. Disposition hydropneumatique selon une des revendications 1 à 3, **caractérisée par le fait**

• **qu'**il s'agit d'un ressort de véhicule
• ou d'un ressort de course avec charge.

5. Disposition hydropneumatique selon une des revendications 1 à 4, **caractérisée par le fait**

• **que** le premier (9) et le second (12) vérin hydraulique forment un groupe unique,
• sachant que les deux vérins hydrauliques (9, 12) sont disposés de préférence en présentant l'un par rapport à l'autre une torsion ayant un angle précis.

6. Disposition hydropneumatique selon une des revendications 1 à 5, **caractérisée par le fait**

• **que** le premier (9) et le second (12) vérin hydraulique présentent des diamètres différents,
• le rapport de leurs carrés correspondant de préférence au rapport entre la course maximale entre l'axe (3) et le cadre du véhicule (2) et la course maximale du coussin pneumatique (5).

7. Disposition hydropneumatique selon une des revendications 1 à **6, caractérisée par le fait**

• **que** la position finale du piston/vérin (8, 10) du premier vérin hydraulique (9) sorti,
• et/ou la position finale du piston/vérin (13, 14) du second vérin hydraulique (12) rentré,
• et/ou la course maximale du coussin pneumatique (5) est limitée dans chaque cas par une butée.

8. Disposition hydropneumatique selon une des revendications 1 à 7, **caractérisée par le fait**

• **qu'**entre le coussin pneumatique (5) et le premier piston/vérin (8, 10) est prévu un élément autorisant un certain mouvement relatif des deux composants l'un par rapport à l'autre,
• et/ou qu'un autre élément ayant la même propriété est prévu.

9. Disposition hydropneumatique selon une des revendications 1 à 8, **caractérisée par le fait qu'**un étranglement est prévu

• dans le premier vérin hydraulique (9),
• et/ou dans le second vérin hydraulique (12),
• et/ou entre les deux vérins hydrauliques.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4311243 A1
- US 3966223 A